# EUROPÄISCHE PATENTANMELDUNG

(11) **EP 0 793 036 A1**
(43) Veröffentlichungstag der Anmeldung: **03.09.1997**
(21) Anmeldenummer: 97103423.6
(22) Anmeldetag: 03.03.1997
(51) Int. Cl.: F16G 13/00, B62H 5/00

(54) **Sicherungskette**

(30) Priorität: 02.03.1996 DE 19608040
(71) Anmelder: Neukirchen, Roland, 50733 Köln (DE)
(72) Erfinder: Neukirchen, Roland, 50733 Köln (DE)
(74) Vertreter: Kierdorf, Theodor, Dipl.-Ing.

(57) **Zusammenfassung**

Eine Sicherungskette, die als Diebstahlschutz zur Sicherung von Zweirädern oder dergleichen vorgesehen ist, besteht im wesentlichen aus gelenkig miteinander verbundenen Kettengliedern (4), die zu einem Endloßstrang zusammenfügbar sind. Die Sicherungskette gemäß der Erfindung zeichnet sich dadurch aus, daß die Kettenglieder (4) zumindest teilweise aus einem glasfaserverstärktem Polyamid ausgebildet sind. Die Kettenglieder bestehen dabei aus einzelnen Kunststofflaschen (2), die mittels Anschlußstutzen und Metallbolzen (3) vernietet sind.

## Beschreibung

Die Erfindung betrifft eine Sicherungskette, insbesondere als Diebstahlschutz zur Sicherung von Zweirädern oder dergleichen, im wesentlichen bestehend aus gelenkig miteinander verbundenen Kettengliedern, die zu einem Endlosstrang zusammenfügbar sind.

Die Erfindung betrifft weiterhin einen Sicherungsstrang, insbesondere als Diebstahlschutz zur Sicherung von Zweirädern oder dergleichen, mit Befestigungsmitteln für ein Schloß.

Derartige Ketten oder Sicherungungsstränge werden zur Sicherung von Fahrrädern, Motorrädern oder dergleichen verwendet. Neben Ketten finden auch Stahlseile und gehärtete Bügelschlösser Anwendung. Insbesondere bei der Verwendung solcher Sicherungseinrichtungen als Fahrradzubehör spielt neben dem Gesichtspunkt der Aufbruchsicherheit das Gewicht und der Platzbedarf der Sicherungseinrichtung eine wesentliche Rolle. Abgesehen davon, daß Ketten und Stahlseile sich relativ leicht und schnell mit einem Bolzenschneider trennen lassen, sind diese relativ schwer. Gehärtete Bügelschlösser haben ein besonders großes Gewicht, welches nicht selten 1.200 Gramm überschreitet, und beanspruchen außerordentlich viel Platz. Für die Verwendung als Fahrradzubehör ist zwar eine platzsparende Unterbringung an einer an einem Rahmenrohr des Fahrrads vorgesehenen Halterung bekannt, jedoch bleibt der Nachteil des außerordentlich hohen Gewichts.

Aufgabe der Erfindung ist es daher, eine Sicherungskette der eingangs genannten Art zu schaffen, die sowohl ein geringeres Gewicht als die vorbekannten Sicherungsmittel aufweist als auch ein unbefugtes Auftrennen wesentlich erschwert.

Die Aufgabe wird gemäß der Erfindung dadurch gelöst, daß die Kettenglieder zumindest teilweise aus einem faserverstärkten Kunststoff ausgebildet sind. Faserverstärkte Kunststoffe bieten eine gegenüber herkömmlichen Kunststoffen erhöhte Zug-, Biege- und Druckfestigkeit sowie Schlagzähigkeit, so daß eine derart ausgebildete Kette ähnliche Festigkeitseigenschaften aufweist, wie ein Material, welches von seiner Festigkeit zwischen Aluminium und Stahl angesiedelt ist. Üerraschenderweise besitzt eine im wesentlichen aus glasfaserverstärktem Kunststoff hergestellte Sicherungskette einen ausreichenden Widerstand gegen Trennen beispielsweise mittels eines Bolzenschneiders. Die Sicherungskette gemäß der Erfindung läßt sich zwar mittels Säge, Stahlblech oder Trennscheibe auftrennen, jedoch erfordert dies einen erheblichen Zeitaufwand, so daß das unbefugte Auftrennen der Kette durch einen Dieb mit entsprechendem Risiko verbunden ist.

Durch die große Gewichtseinsparung aufgrund des verwendeten Materials kann die Sicherungskette in ausreichender Länge hergestellt sein, so daß es beispielsweise möglich ist, ein Fahrrad an einen Baum zu ketten oder sowohl das Vorderrad als auch das Hinterrad eines Fahrrads abzusperren.

Die Verwendung eines Kunststoffs bietet überdies den Vorteil, daß die Kette leicht und vor allem kostengünstig, beispielsweise im Preßverfahren oder im Spritzguß herstellbar ist, wobei das verwendete Material gewisse Freiheiten bei der Formgebung der einzelnen Kettenglieder bietet. So können die Kettenglieder beispielsweise in Gestalt von kompakten Blöcken ausgebildet sein, die mittels Bolzen gelenkig untereinander verbunden sein können.

Nach einer Ausführungsform der Erfindung, bei der die Kettenglieder als kompakte, miteinander verbolzte Blöcke ausgebildet sind, ist vorgesehen, daß diese jeweils auf wenigstens einer ihrer Außenflächen einen Blechbeschlag aufweisen, der mit den Bolzen der Gelenkverbindungen des betreffenden Kettengliedes vernietet ist, so daß die Blechbeschläge der Kettenglieder einen zusammenhängenden Strang bilden. Die Blechbeschläge der Kettenglieder bilden eine zusätzliche Sicherheit gegen ein mögliches Auftrennen des Kettenstranges mittels einer Lötlampe.

Gemäß einer bevorzugten Ausführungsform der Erfindung werden die Kettenglieder durch mittels Bolzen vernietete Laschen gebildet.

Vorzugsweise sind mehrere Laschen mittels der Bolzen zu einem Paket zusammengefaßt, wobei jeweils ein Kettenglied durch ein Laschenpaket gebildet wird. Das bietet einerseits den Vorteil, daß Kettenlaschen relativ einfach durch Pressen oder Stanzen hergestellt werden können, andererseits bietet ein solches Laschenpaket einen hohen Trennwiderstand.

Die Bolzen bestehen vorzugsweise aus Metall.

Die Kettenglieder können aus glasfaserverstärktem Kunststoff ausgebildet sein. Dieser ist besonders kostengünstig in der Herstellung. Denkbar ist jedoch auch die Anwendung von Kohlefasern oder Aramidfasern.

Gemäß der bevorzugten Ausführungsform der Erfindung sind die Kettenglieder aus einem glasfaserverstärktem Polyamid ausgebildet. Polyamide zeichnen sich durch hohe Festigkeit, Steifigkeit, Abriebfestigkeit, Härte und Zähigkeit aus, wodurch diese sich besonders zur Herstellung einer Sicherungskette gemäß der Erfindung eignen.

Das Laschenpaket eines Kettenglieds kann beispielsweise auch so ausgebildet sein, daß nur einige der Laschen aus faserverstärktem Kunststoff ausgebildet sind und die übrigen Laschen aus nicht faserverstärktem Kunststoff oder Metall ausgebildet sind, so daß sich ein quasi geschichteter Aufbau eines Kettenglieds ergibt.

Besonders vorteilhaft bei der Ausbildung der Kettenglieder oder der einzelnen Laschen aus faserverstärktem Kunststoff ist, daß relativ kostengünstig beliebige Formgebungen der Kettenglieder oder einzelner Laschen der Kettenglieder erzielbar sind.

Vorzugsweise sind die Kettenglieder derart ausgebildet, daß sie jeweils im Bereich zwischen den Bolzen keine Angriffsfläche für ein Trennwerkzeug bieten. Ein Trennwerkzeug muß dann immer im Bereich der Bolzen angesetzt werden, wo die Kette ein wesentlich höheren Trennwiderstand bietet, da die Bolzen in Längsrichtung mit durchtrennt werden müssen. Wenn die Kettenglieder aus einzelnen Laschen gebildet werden, überlappen sich die Laschen benachbarter Glieder der Sicherungskette im Bereich der Bolzen, wodurch die Sicherungskette in diesen Bereichen eine größere Materialstärke aufweist. Dadurch wird für ein Auftrennen der Kette ein wesentlich größerer Zeitaufwand benötigt.

Gemäß der bevorzugten Ausführung der Erfindung weisen die Kettenglieder jeweils Abschrägungen auf, die so angeordnet sind, daß ein angesetzes Trennwerkzeug, beispielsweise ein Bolzenschneider, immer in den Bereich der Bolzen rutscht.

Hierzu können die Kettenglieder zumindest teilweise so ausgebildet sein, daß diese auf ihren Außenflächen jeweils ausgehend von einer Scheitellinie in etwa im Bereich ihrer halben Teilungslänge beiderseits zu den Bolzen hin abfallend abgeschrägt sind. Ein an dem Kettenglied angesetztes Trennwerkzeug rutscht immer von der Scheitellinie auf den beiderseits abgeschrägten Flächen in den Bereich des Bolzens, wo jeweils zwei Kettenglieder gelenkig miteiander verbunden sind.

Wenn die Kettenglieder der erfindungsgemäßen Sicherungskette aus mehreren Laschen aufgebaut sind, ist es vorteilhaft, wenn die die Kettenglieder bzw. die Laschen verbindenden Bolzen jeweils Bereiche verschiedener Durchmesser aufweisen. Dadurch wird ein Ausbohren der Bolzen oder ein Herausdrücken mit einem Kettennietwerkzeug zuverlässig verhindert.

Vorzugsweise haben dann benachbarte Bolzen auf gleicher Höhe in axialer Richtung der Bolzen gesehen verschiedene Durchmesser, so daß abwechselnd von Bolzen zu Bolzen Bereiche gleicher Durchmesser versetzt zueinander angeordnet sind.

Dadurch wird in vorteilhafter Art und Weise ein sukzessives Abziehen der Laschen von den Bolzen verhindert, da die weiteren Laschen eines Gliedes durch diese überlappende Laschen benachbarter Glieder und durch die versetzt angeordneten Bereiche gleicher Durchmesser von einem Absatz eines benachbarten Bolzens gehalten werden. Die Ausbildung der Bolzen ist dabei nach außen nicht sichtbar, da die Bolzen durch die Laschen nahezu vollständig verdeckt werden.

Zur Verbindung der Endglieder der Sicherungskette zu einem Endlosstrang ist zweckmäßigerweise ein Kettenschloß vorgesehen.

Das Kettenschloß kann zwei im wesentlichen als Laschen dienende Verschlußplatten sowie Bolzen und wenigstens ein Schließzylinder mit einem Riegel aufweisen, wobei die Bolzen und der Schließzylinder in einer Verschlußplatte fest eingelassen sind und die andere Verschlußplatte Ausnehmungen zur Aufnahme der Bolzen und des Schließzylinders aufweist und wobei der Riegel in seiner Verschlußstellung den Schließzylinder in der für diesen vorgesehenen Aufnahme arretiert.

Die Verschlußplatten des Kettenschlosses können nach äußerer Gestalt und dem verwendeten Material ähnlich ausgebildet sein wie die Laschen des übrigen Kettenstrangs. Das Kettenschloß kann jedoch auch gänzlich aus Metall ausgebildet sein, wodurch das Gesamtgewicht der Sicherungskette nur unwesentlich erhöht wird. Es ist auch nicht unbedingt erforderlich, die äußere Formgebung der Verschlußplatten des Kettenschlosses derjenigen der übrigen Kettenglieder anzupassen, wenn für die Verschlußplatten ein entsprechend starkes Material verwendet wird.

Vorzugsweise sind die Verschlußplatten so ausgebildet, daß die Stirnseiten der Bolzen diese nicht durchdringen. Dadurch ist ein Herausdrücken der Bolzen zuverlässig verhindert. Die Lage der Bolzen ist dann bei verschlossener Sicherungskette von außen nicht sichtbar, da diese durch die betreffenden Endglieder der Sicherungskette hindurchgeführt sind, wenn die Kette verschlossen ist.

Die Bolzen des Kettenschlosses können jeweils auf ihren Stirnflächen drehbar angeordneter Stahlplatten aufweisen. Bei dem Versuch, die Verschlußplatten aufbohren zu wollen, würde der Bohrer beim Auftreffen auf die Stahlplatte diese mitdrehen, so daß ein Eindringen des Bohrers in den betreffenden Bolzen verhindert wird.

Die eingangs genannte Aufgabe wird weiterhin gelöst durch einen Sicherungsstrang, insbesondere als Diebstahlschutz zur Sicherung von Zweirädern oder dergleichen, mit Befestigungsmitteln für ein Schloß, der sich dadurch auszeichnet, daß dieser einstückig aus einem faserverstärkten Kunststoff hergestellt ist. Ein solcher einstückiger Strang läßt sich besonders kostengünstig und einfach herstellen.

Vorzugsweise ist der Sicherungsstrang aus einem glasfaserverstärktem Kunststoff hergestellt. In einer Kunststoffmatrix eingebettete Glasfasern bieten einen hervorragenden Widerstand gegen ein Trennen durch Aufsägen, wenn der Kunststoff geringfügig flexibel ist.

Der Sicherungsstrang kann beispielsweise durch Extrudieren oder Spritzen eines Thermoplasten um einen Fasergewebeschlauch herstellt sein. Hierbei kann ein Thermoplast verwendet wenden, der eine gewisse Flexibilität aufweist, so daß das Trennen des Fasergewebeschlauches durch dessen Beweglichkeit in der Kunststoffmatrix erschwert wird. Als Fasergewebe kommen grundsätzlich neben Glasfasern selbstverständlich auch Karbonfasern oder dergleichen in Betracht.

Als Befestigungsmittel für ein Schloß können beispielsweise an den Enden des Sicherungsstrangs einstückig angeformte Augen vorgesehen sein. Auch können an den Enden des Strangs Kettenglieder der vorstehend beschriebenen Art befestigt sein, die dann mittels eines Kettenschlosses verbindbar sind.

Die Erfindung wird nachstehend beispielsweise anhand des in den Zeichnungen dargestellten Ausführungsbeispiels erläutert. Das dargestellte Ausführungsbeispiel zeigt eine aus einer Vielzahl von Laschen und Bolzen bestehende Sicherungskette, wobei die Erfindung jedoch so zu verstehen ist, daß sie auch einstückig ausgebildete Kettenglieder oder einen einstückig ausgebildeten Sicherungsstrang umfaßt. Das nachstehend beschriebene Ausführungsbeispiel geht davon aus, daß die einzelnen Kettenglieder oder Laschen eines Kettenstrangs aus faserverstärktem Kunststoff gefertigt sind. Es ist grundsätzlich jedoch auch möglich und vorteilhaft, die Kette unter Beibehaltung der beschriebenen Gestalt und Formgebung der Kettenglieder aus Stahlblech zu fertigen.

Es zeigen:
- Fig. 1: eine Seitenansicht zweier Glieder der erfindungsgemäßen Sicherungskette,
- Fig. 2: eine Draufsicht auf die Kettenglieder gemäß Fig. 1
- Fig. 3: eine vergrößerte Draufsicht auf die Kettenglieder als Schnittdarstellung,
- Fig. 4: eine Seitenansicht des Kettenschlosses,
- Fig. 5: eine Draufsicht auf das Kettenschloß gemäß Fig. 3, teilweise geschnitten und
- Fig. 6: eine Draufsicht auf ein geöffnetes Kettenschloß, teilweise geschnitten.

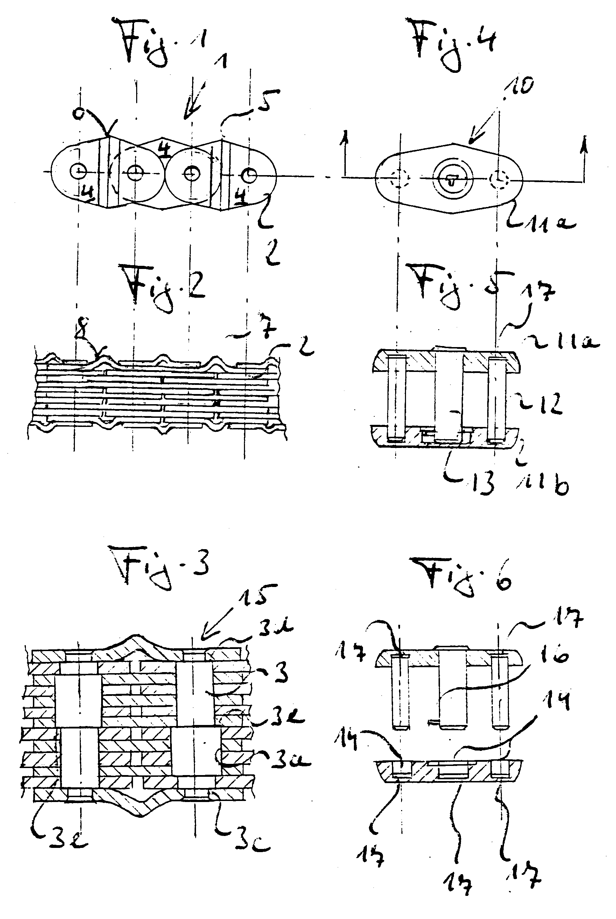

Wie aus den Figuren 1 und 2 ersichtlich ist, ist die Sicherungskette 1 gemäß der Erfindung als Laschenkette ausgebildet, wobei die Laschen 2 durch Bolzen 3 miteinander verbunden sind. Jedes Kettenglied 4 wird durch mehrere übereinander auf dem Bolzen 3 angeordneten Laschen 2 gebildet, wobei die Laschen 2 sich jeweils mit den Laschen 2 eines benachbarten Kettenglieds 4 überlappen.

Die Laschen 2 sind aus einem glasfaserverstärktem Polyamid hergestellt, wohingegen die Bolzen aus Metall bestehen und vernietet sind. Die Laschen sind im Preßverfahren hergestellt, sie können jedoch auch bei entsprechender Ausbildung der Fasern im Spritzgußverfahren hergestellt werden. Neben glasfaservertärkten Polyamiden können beispielsweise auch Kunststoffe, die mit Kohlefasern oder Araimedfasern verstärkt sind, Anwendung finden.

Wie aus Fig. 1 zu entnehmen ist, weisen die Laschen 2 in etwa im Bereich ihrer halben Teilungslänge die größte Höhe auf. Sie sind in Richtung der Bolzen 3 auf ihrer Ober- und Unterseite beiderseits abgeschrägt und der Bereich der größten Laschenhöhe bildet jeweils den Scheitelpunkt 5 von Abschrägungen 6. Auf ihren Seitenflächen weisen die Kettenglieder 4 jeweils eine abgeschrägte Erhöhung 7 auf, wobei die abgeschrägten Flächen 8 zu einer sich über die jeweilige Seitenfläche erstreckenden Scheitellinie 9 zusammenlaufen. Die Erhöhung 7 ist ebenfalls in etwa im Bereich der halben Teilungslänge des Kettenglieds 4 angeordnet, so daß ein dort angesetztes Trennwerkzeug ebenfalls in den Bereich der Bolzen 3 rutscht.

Im Bereich der Bolzen bietet die Sicherungskette 1 den höchsten Materialwiderstand. Einerseits wäre der betreffende Bolzen 3 mit einem Trennwerkzeug zu durchdringen, andererseits überlappen sich die Laschen 2 benachbarter Kettenglieder 4 im Bereich der Bolzen, so daß das Kettenglied 4 in diesem Bereich eine erhöhte Materialstärke aufweist.

Als Sicherung gegen Herausdrücken oder Herausbohren weisen die Bolzen 3 Bereiche verschiedener Durchmesser auf. Ein Abschnitt des Bolzens 3a besitzt einen großen Durchmesser, wohingegen ein anderer Abschnitt 3b einen kleinen Durchmesser besitzt. Die Köpfe 3c der Bolzen 3 weisen demgegenüber einen noch geringeren Durchmesser auf und sind in den äußeren Laschen 2 versenkt. Die Köpfe 3c der Bolzen sind jeweils auf der Außenseite der äußeren Laschen 2 in dort vorgesehenen Senkbohrungen 15 vernietet, wobei der Abschnitt 3b der Bolzen 3 jeweils eine Schulter 3d als Auflage für die äußere Lasche 2 bildet, so daß eine freie Abwinkelbarkeit der übrigen Laschen 1 um den Bolzen 3 gewährleistet ist.

Wie aus Fig. 3 zu ersehen ist, weist jeder der Bolzen 3 einen Bereich größeren Durchmessers 3a auf, welcher von Bolzen 3 zu Bolzen 3 jeweils in axialer Richtung des Bolzens 3 gesehen, versetzt angeordnet ist. Dementsprechend weisen die Laschen 2 jeweils zwei Bohrungen 15 unterschiedlichen Durchmessers auf.

Wenn der genietete Bereich der Bolzen 3 bzw. die Köpfe 3c der Bolzen 3 abgetrennt werden, läßt sich zwar die äußere Lasche 2 entfernen, jedoch werden die weiteren Laschen 2 eines Glieds 4 durch die diese überlappenden Laschen 2 der benachbarten Glieder 4 und teilweise durch die versetzt angeordneten Bereiche verschiedener Bolzendurchmesser von einem Absatz 3e des benachbarten Bolzens 3 gehalten. Ein sukzessives Abziehen der Laschen 2 von den Bolzen 3 ist also nur möglich, wenn mehrere Köpfe 3c abgetrennt werden. Bei der verbolzten und fertig vernieteten Sicherungskette 1 ist die Anordnung der Bereiche verchiedener Durchmesser 3a, 3b nicht sichtbar, so daß ein potentieller Dieb zunächst nicht davon abgehalten wird, Manipulationen an der Sicherungskette 1 vorzunehmen, die fehlschlagen müssen.

In den Figuren 4 bis 6 ist ein Kettenschloß 10 abgebildet, mit welchem jeweils die Endlaschen der Sicherungskette 1 zu einem Endlosstrang verbindbar sind. Das Kettenschloß 10 besteht im wesentlichen aus zwei Verschlußplatten 11a, 11b, zwei Bolzen 12 und einem Schließzylinder 13. Die Bolzen 12 und der Schließzylinder 13 sind in der Verschlußplatte 11a fest eingelassen. In der Verschlußplatte 11b sind entsprechende Aufnahmen 14 vorgesehen, in die sich der Schließzylinder 13 und die Bolzen 12 einfügen, wenn die Endglieder der Sicherungskette 1 verbunden werden. Dabei reichen die Bolzen 12 durch die freien Bohrungen 15 der Endglieder. Der Schließzylinder 13 ist mit einem in der Figur 4 nur schematisch dargestellten Riegel 16 versehen, der den Schließzylinder 13 in der für diesen vorgesehenen Aufnahme 14 in der Verschlußplatte 11b arretiert. Vor den Stirnseiten der Bolzen 12 und vor einer Stirnseite des Schließzylinders 13 sind jeweils drehbare Stahlplatten 17 angeordnet,die eine Sicherung gegen Ausbohren der Bolzen 12 und des Schließzylinders 13 darstelllen. Die Stahlplatten 17 können beispielsweise einen in etwa dem Durchmesser der Bolzen 12 entsprechenden Durchmesser haben und im einfachsten Fall einfach in die Aufnahme 14 eingelegt sein. Wird eine der Verschlußplatten 11a, 11b im Bereich der Bolzen 12 durchbohrt, so drehen sich die Stahlplatten 17 mit dem Bohrer mit, wenn der Bohrer auf diese trifft.

Die Verschlußplatten 11a, 11b können teilweise die äußere Form der übrigen Laschen 2 der Sicherungskette 1 aufweisen. Die Verschlußplatten 11a, 11b sind jedoch aus einem wesentlich stärkeren Material als die übrigen Laschen 2 der Sicherungskette.

### Bezugszeichenliste

- 1: Sicherungskette
- 2: Laschen
- 3: Bolzen
- 3a: Bolzenabschnitt mit großem Durchmesser
- 3b: Bolzenabschnitt mit kleinem Durchmesser
- 3c: Köpfe der Bolzen
- 3d: Schulter
- 3e: Absatz
- 4: Kettenglied
- 5: Scheitelpunkt
- 6: Abschrägungen
- 7: Erhöhung
- 8: abgeschrägte Flächen
- 9: Scheitellinie
- 10: Kettenschloß
- 11a, 11b: Verschlußplatten
- 12: Bolzen
- 13: Schließzylinder
- 14: Aufnahme
- 15: Senkbohrungen
- 16: Riegel
- 17: Stahlplatten

## Patentansprüche

1. Sicherungskette, insbesondere als Diebstahlschutz zur Sicherung von Zweirädern oder dergleichen, im wesentlichen bestehend aus gelenkig miteinander verbundenen Kettengliedern, die zu einem Endlosstrang zusammenfügbar sind, **dadurch gekennzeichnet**, daß die Kettenglieder (4) zumindest teilweise aus einem faserverstärkten Kunststoff ausgebildet sind.

2. Sicherungskette nach Anspruch 1, **dadurch gekennzeichnet**, daß die Kettenglieder (4) als kompakte, miteinander verbolzte Blöcke ausgebildet sind, die jeweils auf wenigstens einer ihrer Außenflächen einen Blechbeschlag aufweisen, der mit den Bolzen der Gelenkverbindungen eines betreffenden Kettengliedes (4) vernietet ist, so daß die Blechbeschläge der Kettenglieder (4) einen zusammenhängenden Strang bilden.

3. Sicherungskette nach Anspruch 1, **dadurch gekennzeichnet**, daß die Kettenglieder (4) durch mittels Bolzen (3) miteinander vernietete Laschen (2) gebildet werden.

4. Sicherungskette nach Anspruch 1 oder 3, **dadurch gekennzeichnet**, daß mehrere Laschen (2) mittels der Bolzen (3) zu einem Paket zusammengefaßt sind, wobei jeweils ein Kettenglied (4) durch ein Laschenpaket gebildet wird.

5. Sicherungskette nach Anspruch 3 oder 4, **dadurch gekennzeichnet**, daß die Bolzen (3) aus Metall bestehen.

6. Sicherungskette nach einem der Ansprüche 1 bis 5, **dadurch gekennzeichnet**, daß die Kettenglieder (4) aus einem glasfaserverstärkten Kunststoff ausgebildet sind.

7. Sicherungskette nach einem der Ansprüche 1 bis 6, **dadurch gekennzeichnet**, daß die Kettenglieder (4) so ausgebildet sind, daß sie jeweils in dem Bereich zwischen den Bolzen (3) keine Angriffsfläche für ein Trennwerkzeug bieten.

8. Sicherungskette nach Anspruch 1 bis 7, **dadurch gekennzeichnet**, daß die Kettenglieder (4) jeweils Abschrägungen (6,8) aufweisen, die so angeordnet sind, daß ein angesetztes Trennwerkzeug immer in den Bereich der Bolzen (3) rutscht.

9. Sicherungskette nach Anspruch 1 bis 8, **dadurch gekennzeichnet**, daß die Kettenglieder (4) zumindest teilweise auf ihren Außenflächen jeweils ausgehend von einem Scheitelpunkt (5) oder einer Scheitellinie (9) in etwa im Bereich ihrer halben Teilungslänge beiderseits zu den Bolzen (3) hin abfallend abgeschrägt sind.

10. Sicherungskette nach einem der Ansprüche 1 bis 9, **dadurch gekennzeichnet**, daß die Bolzen (3) jeweils Bereiche verschiedener Durchmesser aufweisen.

11. Sicherungskette nach einem der Ansprüche 1 bis 10, **dadurch gekennzeichnet**, daß benachbarte Bolzen (3) auf gleicher Höhe in axialer Richtung der Bolzen (3) gesehen verschiedene Durchmesser aufweisen, so daß abwechselnd von Bolzen (3) zu Bolzen (3) Bereiche gleicher Durchmesser versetzt angeordnet sind.

12. Sicherungskette nach einem der Ansprüche 1 bis 11, **dadurch gekennzeichnet**, daß zur Verbindung der Endglieder der Sicherungskette (1) zu einem Endlosstrang ein Kettenschloß (10) vorgesehen ist.
